# EUROPÄISCHE PATENTSCHRIFT

(11) **EP 1 186 128 B1**
(45) Veröffentlichungstag und Bekanntmachung des Hinweises auf die Patenterteilung: **11.12.2002**
(21) Anmeldenummer: 99924645.7
(22) Anmeldetag: 18.06.1999
(51) Int. Cl.: H04H 9/00

(54) **VERFAHREN, VORRICHTUNG FÜR DIE ERFASSUNG VON DATEN ÜBER DIE BETRACHTUNG VON VIDEOINFORMATIONEN, UND DIE WEITERLEITUNG DIESER DATEN ZU EINER ZENTRALEN DATENVERARBEITUNGSANLAGE**
METHOD AND DEVICE FOR DETECTING DATA CONCERNING THE VIEWING OF VIDEO INFORMATION AND THE RELAYING OF THIS INFORMATION TO A CENTRAL DATA PROCESSING INSTALLATION
PROCEDE, DISPOSITIF POUR LA DETECTION DE DONNEES CONCERNANT L'OBSERVATION D'INFORMATIONS VIDEO ET LA TRANSMISSION DE CES DONNEES A UNE INSTALLATION CENTRALE DE TRAITEMENT DE DONNEES

(43) Veröffentlichungstag der Anmeldung: 13.03.2002
(73) Patentinhaber: Swisscom Mobile AG, 3050 Bern (CH)
(72) Erfinder: RITTER, Rudolf, CH-3052 Zollikofen (CH); LAUPER, Eric, CH-3012 Bern (CH)
(74) Vertreter: BOVARD AG - Patentanwälte
(86) Internationale Anmeldenummer: CH9900268
(87) Internationale Veröffentlichungsnummer: WO00079715

(56) Entgegenhaltungen:
- EP-A- 0 240 336
- EP-A- 0 333 570
- EP-A- 0 382 996
- WO-A-90/02453
- FR-A- 2 724 803
- US-A- 4 075 657
- US-A- 4 912 552
- US-A- 5 374 951

## Beschreibung

Die vorliegende Erfindung betrifft ein Verfahren und eine Vorrichtung für die Erfassung und Behandlung von Betrachtungsdaten. Insbesondere betrifft die vorliegende Erfindung ein Verfahren und eine Vorrichtung für die Erfassung und Behandlung von Betrachtungsdaten, die das Sehverhalten von Benutzern beim Betrachten von Videoinformationen betreffen.

Insbesondere für Marketingzwecke wird heute das Sehverhalten von Fernsehzuschauern statistisch erfasst und ausgewertet, einerseits um herauszufinden welche Programme, respektive welche Fernsehsender, wie oft und von wem angeschaut werden und andererseits um von erfassten Fernsehzuschauern eine qualitative Bewertung der angeschauten Programme zu erhalten. In der Patentanmeldung WO 94/15417 A wurde beispielsweise ein mobiles Datenerfassungsgerät beschrieben, welches für Zwecke der Market Research die Benutzung eines Fernsehapparats durch einen Benutzer überwacht und erfasst. Herkömmliche Datenerfassungsgeräte und -verfahren eignen sich allerdings nicht dafür das Sehverhalten von Benutzern auf der Bildebene zu erfassen, das heisst das Sehverhalten von Individuen und/oder Gruppen beim Betrachten von konkreten bewegten und/oder stillen Videoinformationen statistisch zu erfassen.

In der Patentanmeldung WO 90/02453 wird ein System und ein Verfahren für die Überwachung von Fernsehzuschauern beschrieben. Gemäss WO 90/02453 werden Lichtstrahlen, die von den Augen eines Zuschauers reflektiert werden, der sich innerhalb eines definierten Sehbereichs vor einem Fernsehgerät befindet, mittels eines geeigneten Empfängers erfasst, der beispielsweise auf dem Fernsehgerät positioniert ist. Im Empfänger wird anhand der erfassten reflektierten Lichtstrahlen bestimmt, ob der betreffende Zuschauer den Fernsehbildschirm betrachtet. Angaben über die Betrachtungszeit und den gewählten Fernsehkanal werden gemäss WO 90/02453 gespeichert und über das Telefonnetz an eine Zentrale übermittelt. Das System gemäss WO 90/02453 ist auf die Erfassung des Zuschauers innerhalb eines definierten Sehbereichs begrenzt und kann nur detektieren, ob der Bildschirm vom Zuschauer betrachtet wird oder nicht; so sind beispielsweise keine Angaben über Bildbereiche oder Bildobjekte möglich, die vom Zuschauer auf dem Fernsehbildschirm betrachtet werden.

Es ist eine Aufgabe dieser Erfindung, ein neues und besseres Verfahren sowie eine neue und bessere Vorrichtung für die Erfassung und Behandlung von Betrachtungsdaten vorzuschlagen, welche es ermöglichen das Sehverhalten von Benutzern beim Betrachten von Videoinformationen zu erfassen.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Dieses Ziel wird durch die vorliegende Erfindung insbesondere dadurch erreicht, dass beim Betrachten von Videoinformationen, beispielsweise stille oder bewegte Bilder von übertragenen Fernsehprogrammen, wiedergegebenen gespeicherten Videosequenzen, Bildern oder Grafiken, Angaben über Blickrichtungen eines Benutzers relativ zu den betrachteten Videoinformationen bestimmt werden, indem die Videoinformationen durch eine Virtuelle Retinale Anzeigevorrichtung direkt auf die Retina des Benutzers projiziert werden und dabei aktuelle Augenpositionen des Benutzers bestimmt werden, und dass die Betrachtungsdaten, die mindestens diese Angaben über Blickrichtungen enthalten, an eine Auswertungseinheit, zum Beispiel über ein Telekommunikationsnetz an eine Zentrale übertragen werden. Dies hat den Vorteil, dass Blickrichtungen eines Benutzers relativ zu betrachteten Videoinformationen bestimmt werden können, ohne dass dabei horizontale oder vertikale Kopfbewegungen des Benutzers mitberücksichtigt werden müssen. Zudem wird ermöglicht, dass Betrachtungsdaten über Sehgewohnheiten von Benutzern beim Betrachten von Videoinformationen zentralisiert erfasst werden können, insbesondere Angaben darüber, welche Bildausschnitte von wiedergegebenen Videoinformationen betrachtet werden. Die erfassten Betrachtungsdaten stehen dann in der Zentrale zur weiteren

In einer Ausführungsvariante umfassen die an die Zentrale übermittelten Betrachtungsdaten Benutzeridentifizierungsdaten, welche beispielsweise von Identifizierungsmodulen stammen, zum Beispiel von SIM-Karten (Subscriber Identity Module), die jeweils den Benutzern zugeordnet sind. Dies ermöglicht, dass Auswertungen und Verwendungen von erfassten Betrachtungsdaten, wie oben erwähnt, auf der Ebene von individuellen Benutzern vorgenommen werden können, oder dass zusätzliche bekannte Informationen über betreffende Benutzer in die Auswertung und Weiterverwendung von erfassten Betrachtungsdaten miteinbezogen werden können.

In einer Ausführungsvariante umfassen die an die Zentrale übermittelten Betrachtungsdaten Videoidentifizierungsdaten. Dies ist insbesondere dann vorteilhaft, wenn die Quelle der Videoinformationen und die Zentrale zur Erfassung der Betrachtungsdaten nicht gemeinsam implementiert sind, so dass erfasste Betrachtungsdaten bei deren Auswertung und Weiterverwendung den betreffenden Videoinformationen zugeordnet werden können.

In einer Ausführungsvariante umfassen die an die Zentrale übermittelten Betrachtungsdaten Zeitangaben. Je nach der Art der Videoinformationen, beispielsweise bei der Übertragung von Videoinformationen durch Fernsehprogramme, können Zeitangaben dazu verwendet werden, erfasste Betrachtungsdaten bei deren Auswertung und Weiterverwendung den betreffenden Videoinformationen zuzuordnen.

Vorzugsweise werden die erfassten und übermittelten Betrachtungsdaten in der Zentrale gespeichert, beispielsweise in einer Betrachtungsdatenbank, wodurch die Betrachtungsdaten auch zu späteren Zeitpunkten, insbesondere für statistische Auswertungen, zur Verfügung gestellt werden können.

In einer Ausführungsvariante ist das obengenannte Telekommunikationsnetz ein Mobilfunknetz, zum Beispiel ein GSM- oder UMTS-Netz oder ein anderes, beispielsweise satellitenbasiertes, Mobilfunknetz. Dies hat den Vorteil, dass die Erfassung von individuellen Betrachtungsdaten beim Betrachten von Videoinformationen unabhängig von festen Netzwerkanschlüssen mobil durchgeführt werden kann.

Nachfolgend wird eine Ausführung der vorliegenden Erfindung anhand eines Beispieles beschrieben. Das Beispiel der Ausführung wird durch folgende einzige beigelegte Figur illustriert:

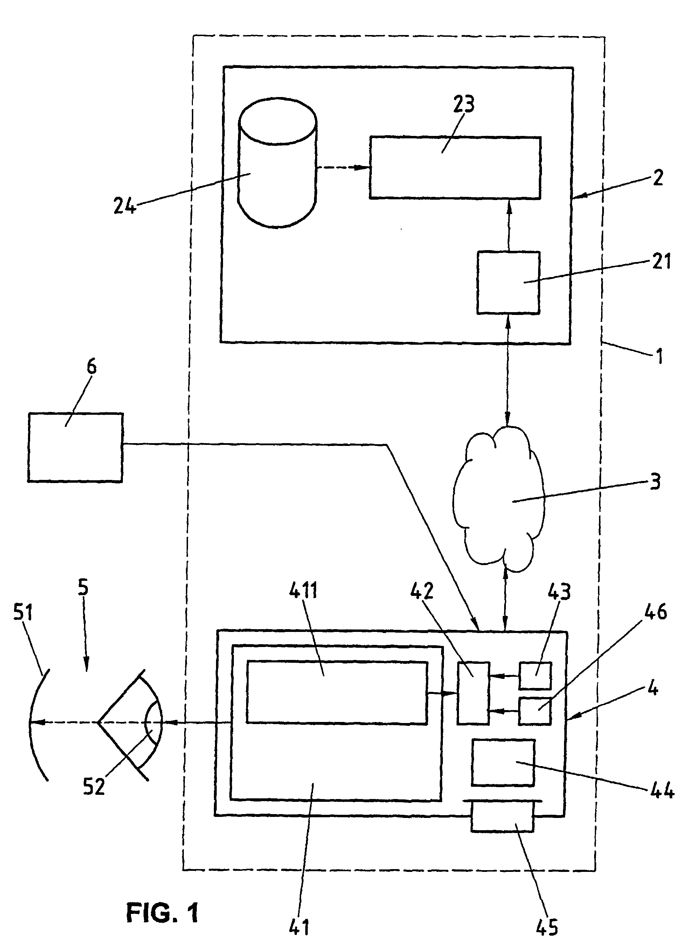

Figur 1 zeigt ein Blockdiagramm des Systems, welches Blockdiagramm schematisch eine Zentrale darstellt, die über ein Telekommunikationsnetz mit einer Vorrichtung, insbesondere ein Kommunikationsendgerät, verbunden ist, welches Kommunikationsendgerät eine Videoanzeigevorrichtung umfasst, die Videodaten auf die Retina eines Auges projiziert und die ein Augenpositionsbestimmungsmodul umfasst, welches aktuelle Augenpositionen eines Benutzers bestimmt.

In der Figur 1 bezieht sich die Bezugsziffer 4 auf eine Vorrichtung, insbesondere ein Kommunikationsendgerät, beispielsweise ein festinstalliertes Kommunikationsendgerät 4, zum Beispiel ein Telefon oder ein kommunikationsfähiger Personal Computer, welches über ein Festnetz 3, zum Beispiel ein öffentliches geschaltetes Telefonnetz, ein ISDN-Netz (Integrated Services Digital Network), ein IP-basiertes Netz (Internet Protocol), oder ein WAN (Wide Area Network) oder LAN (Local Area Network) Daten mit einer Zentrale 2 austauschen kann, oder ein mobiles Kommunikationsendgerät 4, das heisst ein Mobilgerät 4, zum Beispiel ein Mobilfunktelefon oder ein kommunikationsfähiger Laptop- oder Palmtop Computer, welches über ein Mobilfunknetz, zum Beispiel ein GSM- oder ein UMTS-Netz oder ein anderes, beispielsweise satellitenbasiertes Mobilfunknetz, Daten mit einer Zentrale 2 austauschen kann, beispielsweise unter Zuhilfenahme von SMS-Meldungen (Short Message Services), USSD-Meldungen (Unstructured Supplementary Services Data), GPRS-Diensten (Generalized Packet Radio Service) oder gemäss einem geeigneten Protokoll über den Nutzkanal.

Die Zentrale 2 basiert beispielsweise auf einem handelsüblichen Kommunikationsserver, der über ein Kommunikationsmodul 21 mit den nötigen Hard- und Softwarekomponenten verfügt um über das Telekommunikationsnetz 3 mit den Kommunikationsendgeräten 4 zu kommunizieren. Die Zentrale 2 ist direkt oder über geeignete Netzwerkelemente, beispielsweise ein Mobile Switching Center (MSC), mit dem Telekommunikationsnetz 3 verbunden, und umfasst eine Datenbank 24, die auf dem selben oder einem separaten Computer implementiert ist.

Wie in der Figur 1 dargestellt ist, umfasst das Kommunikationsendgerät 4 eine Videoanzeigevorrichtung 41, die Videoinformationen durch Projizierung entsprechender Bildsignale auf die Retina 51 des Auges 5 des Benutzers des Kommunikationsendgeräts 4 wiedergibt. Die Videoinformationen sind beispielsweise stille oder bewegte Bilder von übertragenen Fernsehprogrammen oder wiedergegebenen gespeicherten Videosequenzen, Bildern, oder Grafiken, die beispielsweise von der Zentrale 2 oder von einer anderen mit dem Kommunikationsendgerät 4 über eine kontaktbehaftete Videoschnittstelle verbundene Videoquelle 6, beispielsweise ein Fernsehempfänger, ein Videoabspielgerät, zum Beispiel ein Videokassettenrecorder oder ein Wiedergabegerät für auf Datenträgern gespeicherte digitale Videoinformationen, bezogen respektive geliefert werden.

Eine Videoanzeigevorrichtung 41, die Bildsignale direkt auf die Retina 51 eines Betrachters projizieren kann, eine sogenannte Virtuelle Retinale Anzeigevorrichtung (Virtual Retinal Display, VRD), wurde in den Patentanmeldungen WO 94/09472 und WO 97/37339 beschrieben. Diese Virtuellen Retinalen Anzeigevorrichtungen können über eine Videoschnittstelle mit Videoinformationen versorgt werden, beispielsweise in Form eines RGB-Signals, eines NTSC-Signals, eines VGA-Signals oder eines anderen formatierten farbigen oder monochromen Video- oder Grafiksignals. Der Fachmann wird verstehen, dass es vorteilhaft sein kann die in den erwähnten Patentschriften WO 94/09472 und WO 97/37339 beschriebene Virtuelle Rertinale Anzeigevorrichtung, respektive die dort beschriebene Videoschnittstelle, so anzupassen, dass es auch andere Formate von Fernsehsignalen und insbesondere digitale Videodaten effizient entgegennehmen kann. Mittels eines nicht dargestellten Schnittstellenmoduls können Fernsehsignale und Videodaten aber auch geeignet an die Videoschnittstelle angepasst werden, respektive erhaltene Videodaten so umgewandelt werden, dass sie an die Videoschnittstelle angelegt werden können.

Die Videoanzeigevorrichtung 41 und die weiteren Komponenten des Kommunikationsendgeräts 4 können in einem gemeinsamen oder in separaten Gehäusen implementiert werden, wobei die Videoanzeigevorrichtung 41 in einem ersten Gehäuse beispielsweise über eine drahtgebundene oder über eine drahtlose Schnittstelle mit Komponenten im zweiten Gehäuse verbunden wird.

Wie in der Figur 1 schematisch dargestellt ist, umfasst die Videoanzeigevorrichtung 41 ein Augenpositionsbestimmungsmodul 411, welches aktuelle Augenpositionen des Benutzers beim Betrachten von Videoinformationen bestimmen und über die oben erwähnte, oder über eine zusätzliche drahtgebundene oder drahtlose Schnittstelle an ein Rückmeldemodul 42 des Kommunikationsendgeräts 4 leiten kann. Ein Augenpositionsbestimmungsmodul (Eye Tracker), welches aktuelle Augenpositionen basierend auf der Position der Pupille 52 eines Benutzers bestimmt, wurde ebenfalls in der oben erwähnten Patentanmeldung WO 94/09472 beschrieben und kann vom Fachmann so erweitert werden, dass die bestimmte Augenposition über eine geeignete Schnittstelle für Komponenten ausserhalb der Videoanzeigevorrichtung 41 verfügbar ist; je nach Ausführung können Werte für beide Augen verfügbar gemacht werden.

Das Rückmeldemodul 42 des Kommunikationsendgeräts 4, beispielsweise ein programmiertes Softwaremodul, das auf einem Prozessor des Kommunikationsendgeräts 4 ausgeführt wird, übermittelt bestimmte aktuelle Augenpositionen des Benutzers, gegebenenfalls zusammen mit anderen Betrachtungsdaten, an eine Auswertungseinheit, beispielsweise ein programmiertes Softwaremodul im Kommunikationsendgerät 4, oder insbesondere unter Zuhilfenahme von Kommunikationsdiensten des Kommunikationsendgeräts 4 über das Telekommunikationsnetz 3 an die Zentrale 2. In der Zentrale 2 werden die übermittelten Betrachtungsdaten mit den aktuellen Augenpositionen vom Kommunikationsmodul 21 entgegengenommen und an das Verarbeitungsmodul 23 geleitet.

Je nach Ausführungsvariante und Anwendung umfasst das Kommunikationsendgerät 4 weitere Module 43, 44, 45, 46 die Daten zu den Betrachtungsdaten beisteuern.

Das Zeitbestimmungsmodul 43 bestimmt die aktuelle Zeit und überträgt die bestimmte aktuelle Zeit an das Rückmeldemodul 42, von wo es zusammen mit den bestimmten aktuellen Augenpositionen in den Betrachtungsdaten an die Zentrale 2 übermittelt wird. Zusätzlich zur Festlegung des Zeitpunkts der bestimmten Augenpositionen, kann die Zeitangabe auch dazu verwendet werden, die zu diesem Zeitpunkt betrachteten Videoinformationen zu identifizieren, beispielsweise wenn der zu diesem Zeitpunkt angeschaute Fernsehkanal bekannt ist.

Das Eingabemodul 44 ermöglicht es einem Benutzer, Benutzerdaten einzugeben und diese mittels des Rückmeldemoduls 42 zusammen mit Betrachtungsdaten oder separat an die Zentrale 2 zu übertragen. Benutzerdaten sind beispielsweise qualitative Angaben, beispielsweise eine Zahl aus einer Bewertungsskala oder Instruktionen oder Anworten, die an die Zentrale 2 übermittelt werden. Das Eingabemodul 44 umfasst beispielsweise Bedienungselemente und entsprechende programmierte Softwarefunktionen, die mit den Bedienungselementen eingegebene Benutzerdaten entgegennehmen können. Das Eingabemodul 44 kann aber auch ein programmiertes Softwaremodul sein, welches, beispielsweise zu vorgegebenen Zeiten oder als Anwort auf vordefinierte Signale oder Instruktionen, die von der Videoquelle 6 oder der Zentrale 2 an das Kommunikationsendgerät 4 übermittelt werden, bestimmte aktuelle Augenpositionen als Benutzerdaten an die Zentrale 2 übermittelt oder, in der Funktion der oben erwähnten Auswertungseinheit, bestimmte aktuelle Augenpositionen mit vordefinierten Positionswerten oder mit Positionswerten, die von der Videoquelle 6 oder der Zentrale 2 an das Kommunikationsendgerät 4 übermittelt werden, vergleicht und auf Grund dieses Vergleichs den Positionswerten entsprechende Operationen ausführt, Ereignisse einleitet, und/oder Instruktionen, Antworten oder Bewertungen als Benutzerdaten an die Zentrale 2 überträgt. Die Vergleichsoperation kann auch in der Zentrale 2 durchgeführt werden, worauf später näher eingegangen wird. Ein solches Eingabemodul 44 ermöglicht folglich die Virtuelle Retinale Anzeigevorrichtung 41, respektive das Kommunikationsendgerät 4 mit der Virtuellen Retinalen Anzeigevorrichtung 41 als grafische Benutzerschnittstelle einzusetzen, die vom Benutzer durch Positionierung seiner Augen gesteuert werden kann, indem mittels der Virtuellen Retinalen Anzeigevorrichtung GUI-Objekte (Graphical User Interface) in den Bildbereichen auf die Retina des Benutzers projiziert werden, die den genannten Positionswerten entsprechen. Entsprechende Videoinformationen für eine solche grafische Benutzerschnittstelle können beispielsweise auch von der Zentrale 2 aus an das Kommunikationsendgerät 4 übermittelt werden.

Das Identifizierungsmodul 45, beispielsweise eine SIM-Karte (Subscriber Identity Module), enthält Benutzeridentifizierungsdaten, beispielsweise eine IMSI (International Mobile Subscriber Identity) und/oder einen persönlichen biometrischen Code, respektive Schlüssel, die vom Rückmeldemodul 42 zusammen mit anderen Betrachtungsdaten an die Zentrale 2 übermittelt werden kann. Dies ist insbesondere dann nützlich, wenn in der Zentrale 2 Betrachtungsdaten auf einer individuellen Benutzerebene weiterverarbeitet oder ausgewertet werden, oder wenn in der Zentrale 2 zusätzliche benutzerspezifische Daten, beispielsweise Namen- und Adressinformationen aus einer Abonnentendatenbank, zur Weiterverarbeitung der Betrachtungsdaten hinzugezogen werden.

Das Videoidentifizierungsmodul 46, beispielsweise ein programmiertes Softwaremodul, bestimmt für aktuelle Videoinformationen Videoidentifizierungsdaten, beispielsweise den aktuellen Fernsehkanal, den Titel eines Videos mit der aktuellen Sequenznummer des aktuellen Videoframes oder andere Angaben, und übergibt die bestimmten Videoidentifizierungsdaten dem Rückmeldemodul 42 zur Übermittlung mit anderen Betrachtungsdaten an die Zentrale 2.

Durch das Verarbeitungsmodul 23 der Zentrale 2, zum Beispiel ein programmiertes Softwaremodul, werden die empfangenen Betrachtungsdaten ausgewertet und/oder in einer Betrachtungsdatenbank 24 abgespeichert. Eine unmittelbare Auswertung der empfangenen Betrachtungsdaten im Verarbeitungsmodul 23 ist insbesondere dann sinnvoll, wenn auf Grund von darin enthaltenen aktuellen Augenpositionen vordefinierte Ereignisse ausgelöst werden sollen. Zum Beispiel kann das Kommunikationsendgerät 4 mit der Virtuellen Retinalen Anzeigevorrichtung 41, wie oben erwähnt als grafische Benutzerschnittstelle eingesetzt wird, die vom Benutzer durch Augenpositionierung gesteuert wird. Dadurch können Augenpositionen, die einem vordefinierten Bild-Bildbereich der wiedergegebenen Videoinformationen entsprechen, Ereignisse in der Zentrale 2 auslösen. Zum Beispiel kann durch das Verarbeitungsmodul 23 ein Produkte- und/oder Dienstleistungsbestellverfahren eingeleitet werden, oder Informationen, insbesondere Videoinformationen, können über das Telekommunikationsnetz 3 an das Kommunikationsendgerät 4 zur Wiedergabe über die Anzeigevorrichtung 41 übertragen werden, wodurch insbesondere auch GUI-Anwendungen vom Typ Client/Server realisiert werden können. Abgespeicherte Betrachtungsdaten können, beispielsweise zu einem späteren Zeitpunkt, auch statistisch ausgewertet werden. Zum Beispiel kann untersucht werden, welche oder wieviele Benutzer bestimmte Bildbereiche von wiedergegebenen Videoinformationen betrachtet, respektive nicht betrachtet haben, was beispielsweise für die Auswertung von Werbefilmen interessant sein kann. In einer weiteren Variante kann das Verarbeitungsmodul 23 bei der Auswertung der Augenpositionen zudem in den Videoinformationen enthaltene identifizierte Bildobjekte berücksichtigen, so dass die Korrelation der Augenpositionen mit diesen identifizierten Objekten untersucht werden kann. Zur Ausführung dieser letzteren Variante kann es beispielsweise vorteilhaft sein, betreffende Videoinformationen vorgängig mit geeigneten Bildverarbeitungsmitteln so zu analysieren, dass deren bildlicher Inhalt in abstrakter Form, beispielsweise durch Objektbezeichnungen, Vektoren und/oder Koordinatenangaben, beschrieben werden kann. Solche abstrakten Inhaltsbeschreibungen können beispielsweise zusammen mit den betreffenden Videodaten in der Datenbank 24 abgespeichert und dem Verarbeitungsmodul 23 zugeführt werden. Erfasste Betrachtungsdaten können beispielsweise auch benutzerspezifisch als Benutzerprofil abgespeichert und weiterverwertet werden.

An dieser Stelle sollte ausdrücklich darauf hingewiesen werden, dass in der Vorrichtung 4 die Virtuelle Retinale Anzeigevorrichtung 41 zusammen mit dem Eingabemodul 44 in der Funktion einer Auswertungseinheit als GUI-Benutzerschnittstelle verwendet werden kann, ohne dass dabei Daten mit der Zentrale 2 ausgetauscht werden müssen, was den Vorteil hat, dass die Vorrichtung 4 ohne Benutzung von anderen Bedienungselementen oder der Hände von einem Benutzer gesteuert werden kann, was insbesondere auch für nicht kommunikationsfähige Computer interessant sein kann.

Einem interessierten Benutzer können vollständige beschriebene Vorrichtungen 4, insbesondere Kommunikationsendgeräte 4, verkauft oder vermietet werden. Es kann wirtschaftlich auch interessant sein, Ausbausätze zu verkaufen, die die nötigen Komponenten zum Ausbau einer herkömmlichen Vorrichtung, insbesondere ein herkömmliches Kommunikationsendgerät, zu einer beschriebenen Vorrichtung 4, insbesondere ein beschriebenes Kommunikationsendgerät 4, umfassen, welche Ausbausätze insbesondere auch einen Datenträger mit darauf gespeichertem programmiertem Rückmeldemodul 42, programmiertem Eingabemodul 44, programmiertem Videoidentifizierungsmodul 46 und gegebenenfalls einem Zeitbestimmungsmodul 43 umfassen. Interessierten Betreibern können auch Gesamtsysteme unter Lizenz angeboten werden oder Datenträger verkauft werden, die ein programmiertes Kommunikationsmodul 21, Verarbeitungsmodul 23 und gegebenenfalls eine Betrachtungsdatenbank 24 enthalten, um einen herkömmlichen Kommunikationsserver, der die vom Kommunikationsmodul 21 benötigten Hardwarekomponenten umfasst, als beschriebene Zentrale 2 zu betreiben.

## Patentansprüche

1. Verfahren für die Erfassung und Behandlung von Betrachtungsdaten, welche Betrachtungsdaten das Sehverhatten von Benutzern beim Betrachten von Videoinformationen betreffen und welche Betrachtungsdaten über ein Telekommunikationsnetz (3) an eine Zentrale (2) übertragen werden, wo sie weiterbehandelt werden, **dadurch gekennzeichnet,**
**dass** die Videoinformationen mittels einer Virtuellen Retinalen Anzeigevorrichtung (41) direkt auf die Retina (51) des Benutzers projiziert werden,
**dass** beim Projizieren der Videoinformationen Angaben über Blickrichtungen des Benutzers relativ zu den betrachteten Videoinformationen mittels eines Augenpositionsbestimmungsmoduls (411) der Anzeigevorrichtung (41) durch Bestimmung aktueller Augenpositionen des Benutzers bestimmt werden, und
**dass** die Betrachtungsdaten mit mindestens den Angaben über die Blickrichtungen an die Zentrale (2) übertragen werden.

2. Verfahren gemäss Anspruch 1, **dadurch gekennzeichnet, dass** die aktuellen Augenpositionen mit vordefinierten Werten verglichen werden, und dass auf Grund des Resultats dieses Vergleichs vordefinierte Ereignisse ausgelöst werden.

3. Verfahren gemäss einem der Ansprüche 1 oder 2, **dadurch gekennzeichnet, dass** die Betrachtungsdaten in der Zentrale (2) gespeichert werden.

4. Verfahren gemäss einem der Ansprüche 1 bis 3, **dadurch gekennzeichnet, dass** die Betrachtungsdaten Benutzeridentifizierungsdaten umfassen.

5. Verfahren gemäss einem der Ansprüche 1 bis 4, **dadurch gekennzeichnet, dass** die Betrachtungsdaten Videoidentifizierungsdaten umfassen.

6. Verfahren gemäss einem der Ansprüche 1 bis 5, **dadurch gekennzeichnet, dass** die Betrachtungsdaten Zeitangaben umfassen.

7. Verfahren gemäss einem der Ansprüche 1 bis 6, **dadurch gekennzeichnet, dass** das Tetekommunikationsnetz (3) ein Mobilfunknefz ist.

8. Vorrichtung (4) für die Erfassung und Behandlung von Betrachtungsdaten, welche Betrachtungsdaten das Sehverhalten von Benutzern beim Betrachten von Videoinformationen betreffen, welche Videoinformationen mittels einer Anzeigevorrichtung (41) der Vorrichtung (4) wiedergegeben werden, wobei die Vorrichtung (4) ein Rückmeldemodul (42) umfasst, welches Rückmeldemodul (43) die Betrachtungsdaten an eine Auswertungseinheit (2, 44) überträgt, **dadurch gekennzeichnet,**
**dass** die Anzeigevorrichtung (41) eine Virtuelle Retinale Anzeigevorrichtung ist, welche die Videoinformationen direkt auf die Retina (51) des Benutzers projiziert,
**dass** die Virtuelle Retinale Anzeigevorrichtung (41) ein Augenpositionsbestimmungsmodul (411) umfasst, welches beim Projizieren der Videoinformationen Angaben über Blickrichtungen des Benutzers relativ zu den betrachteten Videoinformationen durch Bestimmung aktueller Augenpositionen des Benutzers bestimmt, und
**dass** das Rückmeldemodul (42) so eingerichtet ist, dass es die Betrachtungsdaten mindestens mit den Angaben über die Blickrichtungen an die Auswertungseinheit (2, 44) überträgt.

9. Vorrichtung (4) gemäss Anspruch 8, **dadurch gekennzeichnet, dass** das Rückmeldemodul (43) so eingerichtet ist, dass es die Betrachtungsdaten über ein Telekommunikationsnetz (3) an eine Zentrale (2) überträgt.

10. Vorrichtung (4) gemäss einem der Ansprüche 8 oder 9, **dadurch gekennzeichnet, dass** die Vorrichtung (4) Mittel (44) umfasst, um die aktuellen Augenpositionen mit vordefinierten Werten zu vergleichen, und um auf Grund des Resultats dieses Vergleichs vordefinierte Ereignisse auszulösen.

11. Vorrichtung (4) gemäss einem der Ansprüche 8 bis 10, **dadurch gekennzeichnet, dass** die Vorrichtung (4) ein dem Benutzer zugeordnetes Identifizierungsmodul (45) mit Benutzeridentifizierungsdaten umfasst, und dass die Betrachtungsdaten die Benutzeridentifizierungsdaten umfassen.

12. Vorrichtung (4) gemäss einem der Ansprüche 8 bis 11, **dadurch gekennzeichnet, dass** die Vorrichtung (4) ein Videoidentifizierungsmodul (46) umfasst, welches Videoidentifizierungsmodul (46) den Videoinformationen zugeordnete Videoidentifizierungsdaten bestimmt, und dass die Betrachtungsdaten die Videoidentifizierungsdaten umfassen.

13. Vorrichtung (4) gemäss einem der Ansprüche 8 bis 12, **dadurch gekennzeichnet, dass** die Vorrichtung (4) ein Zeitbestimmungsmodul (43) umfasst, welches die aktuelle Zeit bestimmt, und dass die Betrachtungsdaten Zeitangaben umfassen.

14. Vorrichtung (4) gemäss einem der Ansprüche 8 bis 13, **dadurch gekennzeichnet, dass** die Vorrichtung (4) als Mobilgerät ausgeführt ist, und dass das Telekommunikationsnetz (3) ein Mobilfunknetz ist, über welches Mobilfunknetz (3) die Vorrichtung (4) kommunizieren kann.

## Claims

1. A method for capturing and processing viewing data, which viewing data relate to the viewing behaviour of users when viewing video data and which viewing data are transmitted via a telecommunications network (3) to a central unit (2), where they are further processed, **characterised in that**
the video data are projected directly on the retina (51) of the user by means of a virtual retinal display device (41),
during projecting of the video data, data about lines of sight of the user relative to the viewed video data are determined by determining current eye positions of the user by means of an eye position detection module (411) of the display device (41), and
the viewing data are transmitted to the central unit (2) with at least the data on the lines of sight.

2. The method according to claim 1, **characterised in that** the current eye positions are compared with predefined values, and predefined actions are triggered on the basis of the result of this comparison.

3. The method according to one of the claims 1 or 2, **characterised in that** the viewing data are stored in the said central unit (2).

4. The method according to one of the claims 1 to 3, **characterised in that** the viewing data include user identification data.

5. The method according to one of the claims 1 to 4, **characterised in that** the viewing data include video identification data.

6. The method according to one of the claims 1 to 5, **characterised in that** the viewing data include time indications.

7. The method according to one of the claims 1 to 6, **characterised in that** the telecommunications network (3) is a mobile radio network.

8. A device (4) for capturing and processing viewing data, which viewing data relate to the viewing behaviour of users when viewing video data, which video data are reproduced by means of a display device (41) of the device (4), the device (4) including a feedback module (42), which feedback module (42) transmits the viewing data to an evaluation unit (2, 44), **characterised in that**
the display device (41) is a virtual retinal display device which projects the video data directly on the retina (51) of the user,
the virtual retinal display device (41) includes an eye position detection module (411), which, during projection of the video data, determines data on lines of sight of the user relative to the viewed video information by determining current eye positions of the user, and
the feedback module (42) is set up such that it transmits the viewing data to the evaluation unit (2, 44) at least with the data on the lines of sight.

9. The device (4) according to claim 8, **characterised in that** the feedback module (43) is set up such that it transmits the viewing data via a telecommunications network (3) to a central unit (2).

10. The device (4) according to one of the claims 8 or 9, **characterised in that** the device (4) includes means (44) of comparing the current eye positions with predefined values, and of triggering predefined actions on the basis of the result of this comparison.

11. The device (4) according to one of the claims 8 to 10, **characterised in that** the device (4) includes an identification module (45), assigned to the user, with user identification data, and the viewing data include the user identification data.

12. The device (4) according to one of the claims 8 to 11, **characterised in that** the device (4) includes a video identification module (46), which video identification module (46) determines video identification data associated with the video data, and the viewing data include the video identification data.

13. The device (4) according to one of the claims 8 to 12, **characterised in that** the device (4) includes a time determining module (43) which determines the current time, and the viewing data include time indications.

14. The device (4) according to one of the claims 8 to 13, **characterised in that** the device (4) is designed as a mobile device, and the telecommunications network (3) is a mobile radio network via which mobile radio network (3) the device (4) is able to communicate.

## Revendications

1. Procédé de saisie et de traitement de données de visualisation qui concernent le comportement d'utilisateurs, sur le plan de la vision, lorsqu'ils regardent des informations vidéo, données qui sont transmises, par l'intermédiaire d'un réseau de télécommunications (3), à une centrale (2) où elles sont traitées, **caractérisé en ce que**
les informations vidéo sont projetées directement sur la rétine (51) de l'utilisateur au moyen d'un dispositif d'affichage virtuel rétinien (41),
lors de la projection des informations vidéo, des renseignements sur les directions du regard de l'utilisateur par rapport aux informations vidéo à regarder sont déterminés au moyen d'un module de détermination de la position des yeux (411) faisant partie du dispositif d'affichage (41), par la détermination de positions des yeux de l'utilisateur aux instants considérés, et
les données de visualisation sont transmises à la centrale (2) avec au moins les renseignements sur les directions du regard.

2. Procédé selon la première revendication, **caractérisé en ce que** les positions des yeux aux instants considérés sont comparées à des valeurs déterminées à l'avance, et que, sur la base du résultat de cette comparaison, des évènements fixés à l'avance sont déclenchés.

3. Procédé selon la revendication 1 ou 2, **caractérisé en ce que** les données de visualisation sont mises en mémoire dans la centrale (2).

4. Procédé selon l'une des revendications 1 à 3, **caractérisé en ce que** les données de visualisation comprennent des données d'identification de l'utilisateur.

5. Procédé selon l'une des revendications 1 à 4, **caractérisé en ce que** les données de visualisation comprennent des données d'identification vidéo.

6. Procédé selon l'une des revendications 1 à 5, **caractérisé en ce que** les données de visualisation comprennent des indications d'heure.

7. Procédé selon l'une des revendications 1 à 6, **caractérisé en ce que** le réseau de télécommunications (3) est un réseau radio mobile.

8. Dispositif (4) de saisie et de traitement de données de visualisation qui concernent le comportement d'utilisateurs, sur le plan de la vision, lorsqu'ils regardent des informations vidéo qui sont reproduites au moyen d'un dispositif d'affichage (41) du dispositif (4), ce dispositif (4) comprenant un module de répétition (42) qui transmet les données de visualisation à une unité d'interprétation (2, 44), **caractérisé en ce que**
le dispositif d'affichage (41) est un dispositif d'Affichage Rétinien Virtuel qui projette les informations vidéo directement sur la rétine (51) de l'utilisateur,
le dispositif d'Affichage Rétinien Virtuel (41) comprend un module de détermination de la position des yeux (411) qui, lors de la projection des informations vidéo, établit des renseignements sur les directions du regard de l'utilisateur par rapport aux informations vidéo regardées, en déterminant des positions des yeux de l'utilisateur aux instants considérés, et le module de répétition (42) est conçu de telle manière qu'il transmette à l'unité d'exploitation (2, 44) les données de visualisation avec au moins les renseignements sur les directions du regard.

9. Dispositif (4) selon la revendication 8, **caractérisé en ce que** le module de répétition (42) est conçu de manière à transmettre les données de visualisation à une centrale (2) par l'intermédiaire d'un réseau de télécommunications (3).

10. Dispositif (4) selon la revendication 8 ou 9, **caractérisé en ce qu'**il comprend des moyens (44) servant à comparer les positions des yeux aux instants considérés à des valeurs fixées à l'avance et à déclencher, sur la base du résultat de cette comparaison, des évènements déterminés à l'avance.

11. Dispositif (4) selon l'une des revendications 8 à 10, **caractérisé en ce que** le dispositif (4) comprend un module d'identification (45) correspondant à l'utilisateur, avec des données d'identification de ce dernier, et que les données de visualisation comprennent ces données d'identification de l'utilisateur.

12. Dispositif (4) selon l'une des revendications 8 à 11, **caractérisé en ce que** le dispositif (4) comprend un module d'identification vidéo (46) qui détermine des données d'identification vidéo correspondant aux informations vidéo, et que les données de visualisation comprennent les données d'identification vidéo.

13. Dispositif (4) selon l'une des revendications 8 à 12, **caractérisé en ce que** le dispositif (4) comprend un module de détermination de l'heure (43) qui détermine l'heure à l'instant considéré, et que les données de visualisation comprennent des indications d'heure.

14. Dispositif (4) selon l'une des revendications 8 à 13, **caractérisé en ce que** le dispositif (4) est réalisé sous la forme d'un appareil mobile et que le réseau de télécommunications (3) est un réseau radio mobile par l'intermédiaire duquel le dispositif (4) peut communiquer.
